**Europäisches Patentamt**

**European Patent Office**

**Office européen des brevets**

(19)

(11) Veröffentlichungsnummer: **0 335 084 B1**

(12)

# EUROPÄISCHE PATENTSCHRIFT

(45) Veröffentlichungstag der Patentschrift:
28.11.90

(21) Anmeldenummer: **89102213.9**

(22) Anmeldetag: **09.02.89**

(51) Int. Cl.⁵: **B23G 1/34**, B23G 1/32, B23G 5/20

(54) Vorrichtung und Werkzeug zur Herstellung aller bekannten Gewindearten (ausser Sägegewinde) in einem Arbeitsgang.

(30) Priorität: **30.03.88 DE 3810884**

(43) Veröffentlichungstag der Anmeldung:
**04.10.89 Patentblatt 89/40**

(45) Bekanntmachung des Hinweises auf die Patenterteilung:
**28.11.90 Patentblatt 90/48**

(84) Benannte Vertragsstaaten:
**AT BE CH ES FR GB GR IT LI LU NL SE**

(56) Entgegenhaltungen:
EP-A- 0 026 787
EP-A- 0 237 035
WO-A-88/00507
DE-A- 1 923 272
DE-A- 2 346 809
DE-A- 2 516 775
DE-A- 3 001 206
DE-A- 3 527 971
FR-A- 469 152
US-A- 2 451 497

PATENT ABSTRACTS OF JAPAN, Band 8,
Nr. 128 (M-302)(1565), 14. Juni 1984 &
JP-A-59030617 (MITSUBISHI) 18-02-1984
PATENT ABSTRACTS OF JAPAN, Band 8,
Nr. 35 (M-276)(1472), 15. Februar 1984 &
JP-A-58192718 (MITSUBISHI) 10-11-1983

(73) Patentinhaber: **Leeb, Felix, Zum Espat 3,
D-8388 Mettenhausen(DE)**

(72) Erfinder: **Leeb, Felix, Zum Espat 3,
D-8388 Mettenhausen(DE)**

(74) Vertreter: **Schön, Theodor, Patent- und Zivilingenieur,
Sonnleiten 7, D-8311 Moosthenning 1(DE)**

**Beschreibung**

Die Erfindung bezieht sich auf eine Vorrichtung zum Herstellen von Innengewinden ohne Vorbohren in den vollen Werkstoff, insbesondere Sacklochgewinde, mit einem an einer drehangetriebenen Werkzeugspindel excentrisch um die Bohrlochachse geführten und über ein Leitgewinde axial verschieb-baren Gewindefräswerkzeug, dem stirnseitig die Kernbohrung erzeugende Schneiden vorgelagert sind, wobei die Werkzeugspindel in einem zylindrischen Spindelgehäuse über drehangetriebene Excenterplatten radial verstellbar gelagert ist, und an dem Gehäuse der eine Teil des Leitgewindes angeordnet ist.

Für stationäre Maschinen ist aus DE-OS 3 001 206 eine solche Vorrichtung zum Fräsen von Innengewinden ohne Vorbohren im Vollmaterial bekannt, bei welcher eine drehangetriebene Frässpindel in der inneren von zwei ineinandergeschachtelten auf einem Vorschubschlitten gelagerten Excenterbuchsen aufgenommen ist und wobei den Excenterbuchsen ein eigener Drehantrieb zur Erzeugung einer zur Bohrlochachse excentrischen, radialen Bewegung der Frässpindel zugeordnet ist und wobei schließlich auch noch ein eigener in einem bestimmten Übersetzungsverhältnis zum Antrieb der Excenterbuchsen ausgelegter Antrieb für den die Excenterbuchsen tragenden Vorschubschlitten vorgesehen sein muß. Obwohl die bekannte Vorrichtung zum Fräsen von Innengewinden, insbesondere Sacklochgewinden, bedingt durch die Form des Schneidwerkzeuges lediglich für die Bearbeitung spröder kurzfasriger Werkstoffe, wie beispielsweise Holz, bestimmt ist, ist sie infolge der konstruktionsbedingt erforderlichen verschiedenen getrennten Antriebe und infolge der Notwendigkeit der Frässpindel einen eigenen Vorschubschlitten zuzuordnen nur in Verbindung mit schweren stationären Maschinen geeignet.

Aus der US-PS 2 451 497 ist eine in Verbindung mit einer Ständerbohrmaschine oder dergl. ortsfester Maschine einsetzbare Vorrichtung zur Herstellung eines Innengewindes durch Wirbeln in einer vorgebohrten Sacklochbohrung bekannt, bei welcher einer excentrisch zur Bohrungsachse drehangetriebenen Frässpindel eine wahlweise manuell oder durch Hilfskraft angetriebene Vorschubeinrichtung zugeordnet ist. Auch diese Vorrichtung erfodert zwei getrennte Antriebe und ist wegen der Ausgestaltungsform ihres Werkzeuges vor allem nicht zur Herstellung von Innengewinden im vollen Werkstoff geeignet. Darüberhinaus ist ein ortsbeweglicher Einsatz nicht möglich. Ferner bildet die dort aufgezeigte Drehmomentabstützung der Werkzeugspindel keine Drehmomentabstützung für den Antriebsmotor.

Schließlich ist aus der DE-AS 2 346 809 noch eine auf das Werkstück aufsetzbare und auch unabhängig von einer stationären Werkzeugmaschine einsetzbare Vorrichtung zum Wirbeln von Innenwinden in vorgebohrten Ausnehmungen bekannt, die sich jedoch durch ein großes Gewicht und das Erfordernis eines leistungsstarken Antriebes auszeichnet. Aber auch diese Vorrichtung erfordert getrennte Antrieb einerseits für die Fräs- bzw. Wirbelspindel und andererseits für den Vorschub der Wirbel-bzw. Frässpindel. Darüberhinaus erfolgt bei dieser Vorrichtung die Zentrierung über eine bereits vorhandene bzw. vorher erstellte Bohrung.

Aus dem DE-GBM 7 404 896 ist die Anordnung einer teleskopartig ausgebildeten Aufnahme für die Bohrspäne bzw. den Bohrstaub bei einer gewöhnlichen Handbohrmaschine bekennt, wobei die Aufnahme für die Bohrspäne mittels Bohrspitzen rutschsicher am Werkstück anliegt. Eine solche Rutschsicherung eignet sich bauartbedingt nicht zur Festlegung einer ein Fräswerkzeug zum Herstellen von Gewindebohrungen im Vollmaterial aufweisenden Vorrichtung.

Im Vollmaterial werden Gewindebohrungen entweder durch Vorbohren und Nachschneiden des Gewindes oder aber mittels sogenannter Gewindebohrer in einem Arbeitsgang hergestellt.

Dabei ist die eine Arbeitsweise sehr zeit- und damit kostenaufwendig, die andere Arbeitsweise aber nur für Durchgangsbohrungen geeignet. Außerdem erfordern die bekannten Arbeitsweisen für jeden beabsichtigten Durchmesser einer Gewindebohrung den Einsatz eines diesem Durchmesser angepassten Werkzeuges.

In vielen Fällen, insbesondere für die Verschraubung in verhältnismäßig weichem Material, wie beispielsweise Holz, ist es darüber hinaus manchmal erwünscht, den Durchmesser der Gewindebohrung etwas geringer zu halten, als es der Durchmesser der Schraube eigentlich erfordern würde, um beim Einschrauben der Schraube im Gewindebereich eine gewisse Materialverfestigung zu erhalten. Bei der bisherigen Arbeitsweis waren hierfür teure Spezialwerkzeuge erforderlich, so daß eine zusätzliche Verteuerung entstand. Es besteht daher ein Mangel an Vorrichtungen, mit deren Hilfe trotz einheitlicher Vorrichtung und Verwendung eines einheitlichen Werkzeuges Gewindebohrungen unterschiedlicher Durchmessers und unterschiedlicher Gewindearten ohne großen Zeit- und Kostenaufwand auch im Vollmaterial herstellbar sind.

Der Erfindung liegt daher die Aufgabe zugrunde, eine leichte, ortsbewegliche, einfach zu handhabende, und mittels einer handelsüblichen, in ihrer Drehzahl regelbaren sowie hinsichtlich ihrer Antriebsleistung verhältnismäßig geringen Handbohrmaschine antreibbare Vorrichtung zu schaffen, mit deren Hilfe unter Verwendung eines einheitlichen Werkzeuges bei gleicher Gewindesteigung Gewindebohrungen unterschiedlicher Durchmesser (z.B. M 14 und M 16, oder M 18, M 20 und M 22) selbst von ungelernten Arbeitskräften mit wenig Zeitaufwand in einem Arbeitsgang im Vollmaterial (auch Sacklochgewinde) hergestellt werden können. Ferner liegt der Erfindung die Aufgabe zugrunde, ein Werkzeug zu schaffen, mit dem die Herstellung von Ausnehmungen, vor allem Innengewinden ohne Vorbohren im vollen Material aller zerspanbarer Materialien, insbesondere aber Sacklochgewinden möglich ist und welches sich zur Verwendung in der nach dem ersten Teil der Aufgabenstellung zu schaffenden Vorrichtung oder aber auch in anderen Vorrichtungen, die die erforderlichen Funktionen ausführen können, eignet.

Diese Aufgabe wird bezüglich der Vorrichtung dadurch gelöst, daß das Spindelgehäuse von der durch eine handelsübliche, in ihrer Drehzahl regelbare tragbare Bohrmaschine mit Linkslauf angetriebenen Werkzeugspindel drehangetrieben in einem auf der Oberfläche des zu bearbeitenden Werkstückes aufsetzbaren Halter angeordnet ist und mit seinem Leitgewindeteil mit dem am Halter angeordneten anderen Leitgewindeteil im Eingriff ist, wobei der Drehantrieb für die Excenterplatten von der Werkzeugspindel abgeleitet ist, dabei macht die Bohrmaschine als Antrieb für die Werkzeugspindel deren excentrische und axiale Bewegungen mit. Dadurch, daß die die Antriebsquelle bildende Handbohrmaschine in ihrer Drehzahl regelbar ist kann die Schnittgeschwindigkeit einmal hinsichtlich des zu bearbeitenden Materials und zum anderen hinsichtlich der zu erzeugenden Durchmesser eingestellt werden. Die drehangetrieben mit Linkslauf angetriebene Werkzeugspindel ist in einem auf die Oberfläche des zu bearbeitenden Werkstückes aufsetzbaren Halter angeordnet und steht mit einem Leitgewindeteil mit einem am Halter angeordnet weiteren Leitgewindeteil im Eingriff, wobei der Drehantrieb für die Excenterplatten von der Werkzeugspindel abgeleitet ist.

Die Einzelausgestaltungen der Vorrichtung ergeben sich aus den Ansprüchen 2 bis 16.

Durch den rotierenden Antrieb über die getriebliche Antriebsverbindung mit der Werkzeugspindel wird das Spindelgehäuse vermittels der Gewindeanordnung im Halter mit einem gewissen Untersetzungseffekt im Halter nach unten bewegt, derart, daß zusammen mit dem Spindelgehäuse auch die Werkzeugspindel samt Antriebsmaschine und damit das Werkzeug selbst fortschreitend zum Werkstück hin bewegt bzw. in dieses abgesenkt werden, wobei die Gewindeanordnung für ein Absenken entsprechend der durch die Gewindesteigung der Gewindeanordnung vorgezeichnete Absenkgeschwindigkeit sorgt, so daß durch das Werkzeug im Werkstück ein Gewinde gleicher Steigung erzeugt wird.

Bei Erreichen der durch die Länge der Gewindeanordnung vorbestimmten Arbeitstiefe sorgt ein zugleich einen Drehmomentschalter bildender Endschalter für eine Antriebsunterbrechung, so daß kein weiterer Vorschub der Werkzeugspindel und damit auch des Werkzeuges mehr erfolgen kann.

Der Einstellung des jeweils gewünschten Durchmessers der Gewindebohrung dienen die Werkzeugspindel gegenüber dem Spindelgehäuse abstützende verstellbare Excenterplatten. Ein Anschlag läßt die radiale Verstellung der Werkzeugspindel in Bezug auf den Mittelpunkt der Achse des Spindelgehäuses nicht zu, derat, daß die Werkzeugspindel bei keiner Einstellung mit der Achse des Spindelgehäuses zusammenfallen kann und daher das Werkzeug immer um die Achse des Spindelgehäuses rotierend arbeiten muß. Der Verstellung der Excenterplatten ist ein manuell einstellbarer trieb zugeordnet.

Um eine überlastung des Fräswerkzeuges, die zu dessen Bruch führen könnte, auszuschließen, ist für die vorübergehend Abschaltung des Vorschubes ein eistellbarer Drehmomentschalter, der auch als Endschalter wirken kann.

Weiterhin kann noch vorgesehen sein, daß der Antrieb des Spindelgehäuses von Vor- auf Rücklauf umschaltbar gestaltet ist.

Mit der erfindungsgemäßen Vorrichtung ist es möglich, unter Verwendung eines einheitlichen Werkzeuges Gewindebohrungen unterschiedlicher Durchmesser herzustellen, insbesondere aber Gewindebohrungen, die gegenüber den üblichen metrischen Gewinden oder Zollgewinden ein mehr oder minder geringes Untermaß, gegebenenfalls aber auch ein übermaß aufweisen. Bei entsprechender Ausstattung mit Ablese- bzw. Einstellskalen kann die erfindungsgemäße Vorrichtung darüberhinaus auch von ungelernten Arbeitskräften jederzeit und mit geringem Zeitaufwand bedient werden, da der Arbeitsablauf, bedingt daß der Austrag der anfallenden Frässpäne und die Kühlung der Werkzeugschneide durch Druckluft erfolgen und in Verbindung mit einem Endschalter mit Drehmomenteinstellung vollautomatisch abläuft.

Bezüglich eines Werkzeuges zur Verwendung in Verbindung mit der Vorrichtung nach den Ansprüchen 1 bis 16 oder in anderen Vorrichtungen, welche die erforderlichen Funktionen ausführen können wird die Aufgabe dadurch gelöst, daß die die Kernbohrung erzeugenden Schneiden mit Linksdrall zum Gleichlauffräsen ausgebildet sind, und daß diesen gegenüber die die Gewindegänge erzeugenden Schneiden mit einem axialen Abstand angeordnet sind.

Die Schneidhöhe der Schneiden des Stirnfräsers entspricht wenigstens der einfachen Steigung des zu schneidenden Gewindes, gerechnet vom Stirnradius bis zum schneidenfreien Raum.

Ein wesentliches Merkmal der Erfindung besteht ferner darin, daß die Gewindeschneidzähne in einer Ebene angeordnet sind.

Der im Zentrum des Stirnfräsers angeordnete schneidenfreie Raum mit seitlichen Flankenschneiden bringt eine erhebliche Reduzierung des axialen Schneidwiderstandes und bewirkt ferner, daß die Stirnschneiden mit nahezu optimaler Schneidgeschwindigkeit zum Einsatz gebracht werden können.

Eine versetzte Umfangsnut als Spanbrecher kann entweder in den Flankenschneiden oder in den Stirnschneiden des Fräswerkzeuges vorgesehen sein, bzw. kann die als Spanbrecher dienende Umfangsnut bei einem mit einer etwas größeren Fase ausgestatteten Übergang zwischen Stirn- und Flankenschneiden auch in dieser Fase angeordnet sein, was vor allem bei der Erstellung von größeren Gewinden mit großer Steigung der Fall sein dürfte.

Ein zwischen den Vorschneiden und den Gewindeschneidzähnen vorgesehener schneidenfreier, gegebenenfalls als Vertiefung ausgebildeter Raum bewirkt, daß die Herstellung und das Nachschleifen des Fräswerkzeuges vereinfacht werden und ferner auch der Späneabfluß begünstigt wird.

Aufsteigend von Durchmessergrößen bei denen bereits der Einsatz von austauschbaren Schneidplatten möglich ist, dürfte die Verwendung von einsetzbaren Schneidplatten größere wirtschaftliche Bedeutung besitzen.

Die Erfindung ist in der nachfolgenden Beispielsbeschreibung anhand eines in der Zeichnung darge-stellten Ausführungsbeispieles im einzelnen be-schrieben.

In der Zeichnung zeigt die

Figur 1 einen Längsschnitt durch eine erfindungsgemäße Vorrichtung zum Herstellen von Gewindebohrungen in Vollmaterial;

Figur 2 einen Schnitt durch die Vorrichtung gemäß Figur 1 entlang der Linie II–II;

Figur 3 einen Schnitt durch die Vorrichtung gemäß Figur 1 entlang der Linie III–III in Figur 1;

Figur 4 eine Detaildarstellung im vergrößerten Maßstab

Figur 5 eine Seitenansicht eines Werkzeuges zur Verwendung in Verbindung mit einer Vorrichtung gemäß Figur 1 bis 4;

Figur 6 eine Teildarstellung zu Figur 5 im vergrößerten Maßstab.

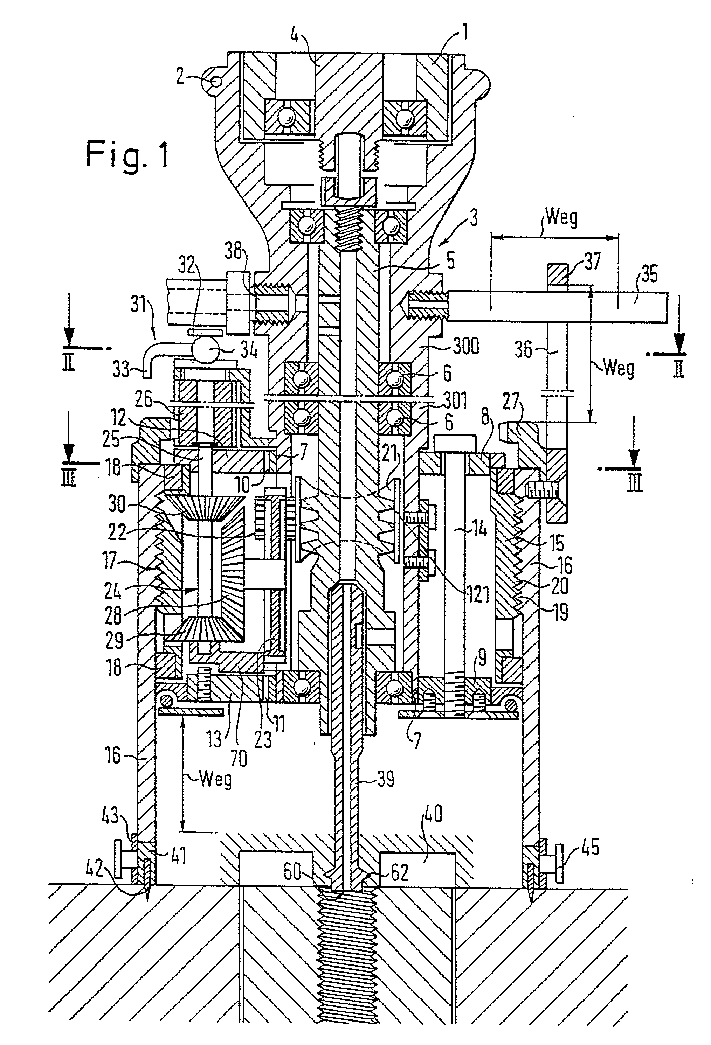

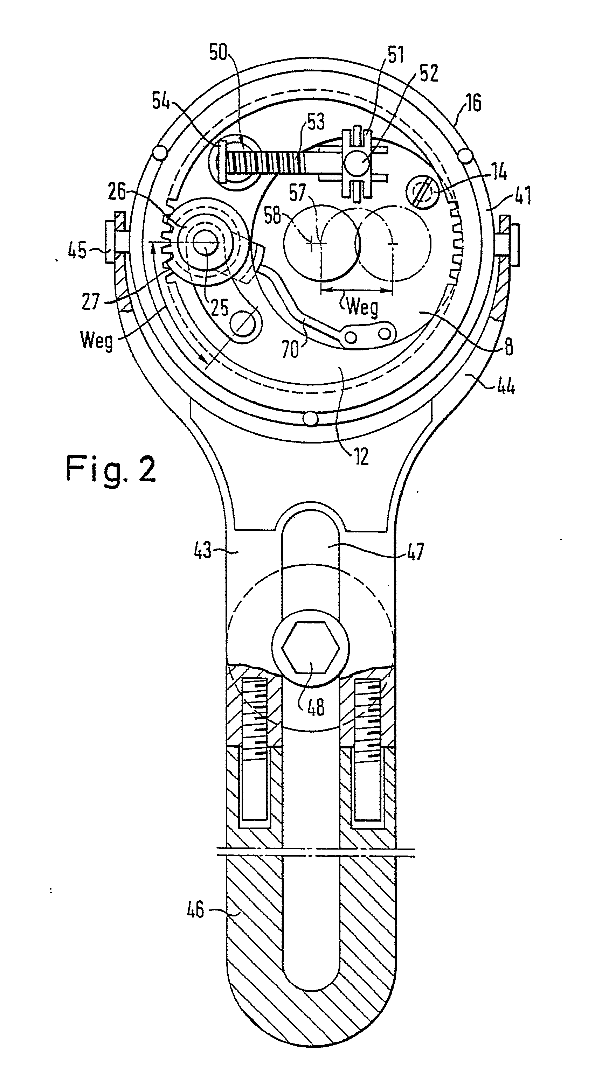

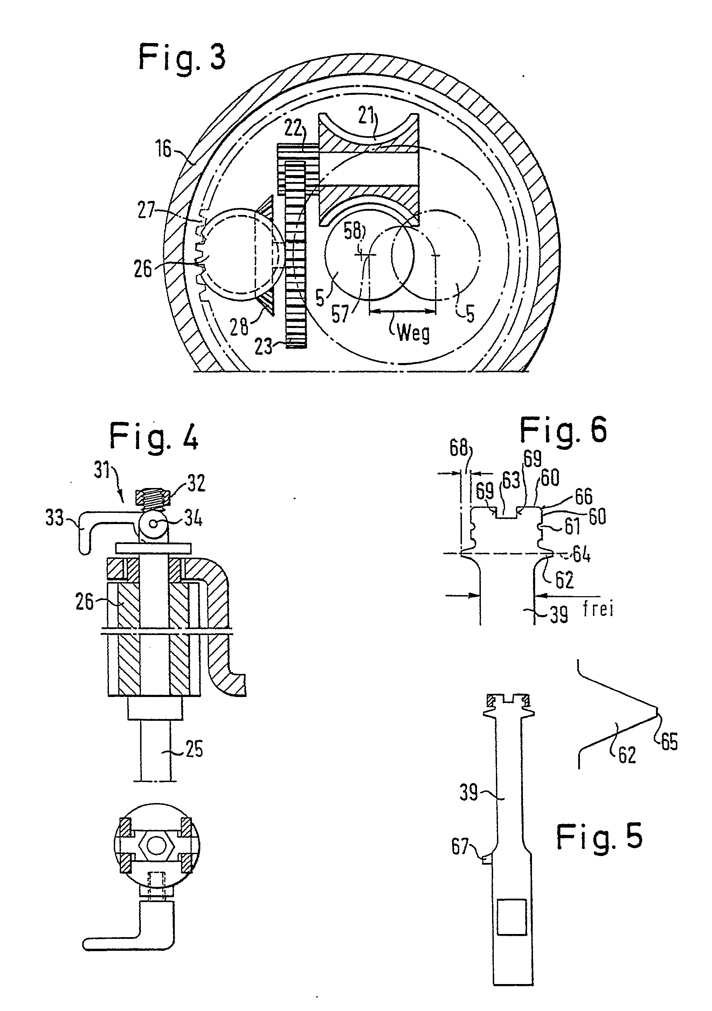

An das Gehäuse 1 einer handelsüblichen elektrischen Handbohrmaschnie ist vermittels einer Klemmverschraubung 2 eine Hülse 3 angeschlossen, die eine mit der Abtriebswelle 4 der Handbohrmaschine kuppelbare Werkzeugspindel 5 aufnimmt. in der Hülse 3 ist die Werkzeugspindel 5 über Kugellager 6 abgestützt. über die Hülse 3 ist die Werkzeugspindel 5 in Ausnehmungen 7 zweier Excenterplatten 8 und 9 aufgenommen. Die Excenterplatten 8 und 9 sind ihrerseits in Ausnehmungen 10 und 11 eines Deckels 12 und eines Bodens 13 eines zylindrischen, ein sogenanntes Spindelgehäuse bildenden Gehäuses 15 drehbar aufgenommen. Ferner sind die Excenterplatten 8 und 9 untereinander, im ge-zeigten Ausführungsbeispiel mittels Schrauben-bolzen 14 und der Hülse 3 drehsicher verbunden. Vermittels der Excenterplatten 8 und 9 kann die Werkzeugspindel 5 radial zur Achse des Spindelgehäuses 15 verstellt werden, so daß Gewindebohrun-gen unterschiedlichen Durchmesser herstellbar sind. Der Verdrehung der im Spindelgehäuse drehbar gelagerten Excenterplatten ist ein Spindeltrieb 50 zugeordnet, der eine über ein Auge 51 an einen an der Excenterplatte 8 bzw. 9 angeordneten Zapfen 52 angeschlossene Schraubspindel 53 sowie eine Spindelmutter 54 umfasst, wobei die Spindelmutter 54 gegen einen starr am Deckel 12 bzw. Boden 13 des Spindelgehäuses 5 angeüordneten Widerlagerbock abgestützt ist. Wie insbesondere aus den Darstellungen der Figuren 2 und 3 ersichtlich ist, sind die Ausnehmungen 10 und 11 für die Aufnahme der Hülse 3 bzw. des Hülsenteiles 301 in den Excenterplatten so angeordnet, daß die Achse 57 des Werkzeuges 39 bzw. der Werkzeugspindel 5 bei keiner Einstellung der Excenterplatten 12 und 13 mit der Achse 58 des Spindelgehäuses zusammenfallen kann, so daß das Werkzeug 39 bei jeder beliebigen Einstellung immer um die Achse 58 des Spindelgehäuses 15 kreisend arbeitet. Das Spindelgehäuse 15 ist in einem im gezeigten Ausführungsbeispiel rohrförmigen Halter 16 vermittels einer Gewindeanordnung 17 axial verstellbar abgestützt. Ferner ist das Spindelgehäuse 15 mit zwei Führungsringen 18 ausgestattet, die an seinem oberen bzw. unteren Ende angeordnet sind und an der Innenumfangsfläche des rohrförmigen Halters 16 anliegen. Die Gewindeanordnung 17 umfasst ein am rohrförmigen Halter 16 angeordnetes Innengewinde 19 und ein am Spindelgehäuse 15 angeordnetes Außengewinde 20. Das Spindelgehäuse 15 ist innerhalb des Halters 16 rotierend angetrieben, wobei eine auf der Werkzeugspindel 5 angeordnete Schnecke 121 mit einem Schneckenrad 21 kämmt, welches seinerseits über ein Zahnradpaar 22, 23 ein Kegelradgetriebe 24 antreibt, welches den Antrieb vermittels einer Welle 25 auf ein Ritzel 26, das seinerseits mit einem innenverzahnten, im Bereich der oberen Stirnseite des Halters 16 angeordneten Zahnkranz 27 kämmt. Das Kegelradgetriebe 24 umfasst ein Eingangszahnrad 28 und zwei Ausgangszahnräder 29 und 30, die für vorlaufenden und rücklaufenden Antrieb des Spindelgehäuses 15 wechselweise mit dem Eingangszahnrad 28 in Eingriff bringbar und hierzu in in der Zeichnung nicht im Einzelnen dargestellter Weise auf der Welle 25 axial verschiebbar angeordnet sind. Zur Begrenzung der Arbeitstiefe der Vorrichtung ist ein Drehmomentabschalter 31 vorgesehen, der bei Erreichen der maximal zugelassenen Arbeitstiefe den Drehantrieb des Spindelgehäuses 15 unterbricht. Der Drehmomentabschalter umfasst im gezeigten Ausführungsbeispiel eine auf die Welle 25 aufschraubbare Mutter 32 und einen mit einem Auslegerarm 33 versehenen Excenter 34, wobei das Ritzel 26 mittels der auf den Excenter 34 wirkenden Mutter 32 kraftschlüssig mit der Welle 25 verspannt wird und der Excenter 34 durch den Auslegerarm 33 in eine unwirksame Lager verstellt wird, wenn die maximal zugelassene Arbeitstiefe erreicht ist, so daß die kraftschlüssige Verbindung zwischen Ritzel 26 und Welle 25 aufgehoben und damit der Drehantrieb des Spindelgehäuses 15 unterbrochen wird. Der Auslegerarm 33 wirkt dabei mit der oberen Stirnfläche des Zahnkranzes 27 zusammen. Der Zahnkranz 27 ist im gezeigten Ausführungsbeispiel oberseitig auf den rohrförmigen Halter 16 aufgesetzt. Die die Werkzeugspindel 5 aufnehmende Hülse 3 ist im gezeigten Ausführungsbeispiel geteilt ausgeführt und umfaßt einen oberen, mit dem Gehäuse 1 der Antriebsmaschine verbindbaren 300 und einen unteren, im Spindelgehäuse 15 bleibend aufgenommenen Teil 301. Am oberen Teil 300 der Hülse 3 ist ein radial ausladende Stützstab 35 starr befestigt, welcher in eine vertikal gerichtete Langlochausnehmung 36 eines am Halter 16 befestigten Bügels 37 eingreift und zusammen mit diesem eine Drehmomentenabstützung bildet. Dabei ist der Stützstab axial verschiebbar in der Langlochausnehmung 36 aufgenommen. Am oberen Teil 300 der Hülse 3 ist weiterhin ein radialer Druckluftanschluß 38 angeordnet, über den Druckluft in die Hülse 3 und durch diese hindurch in den unteren Bereich des Halters 16 und damit zur Arbeitsstelle des Werkzeuges 39 gefördert wird. Zum Austritt der Druckluft und zum Austrag der Späne ist der Halter 16 im Bereich seines unteren Endes mit einer Auslaßöffnung 40 versehen. An die untere Stirnfläche des Halters 16 ist im gezeigten Ausführungsbeispiel gemäß Figur 1 ferner ein Ring 41 mit darin verstellbar angeordneten, in einer Stellung nach unten vorstehenden Zentrierspitzen 42 angeschlossen, über die der Halter 16 in genau ausgrichteter Lage auf dem Werkstück festgelegt werden kann. In der Figur 2 ist ferner gezeigt, daß an den Halter 16 auch noch ein Haltebügel 43 angeschlossen werden kann, welcher ein gabelförmiges Vorderteil 44 aufweist und über dieses vermittels Schrauben 45 an den Halter anschließbar ist. Der Haltebügel 43 kann mit einem ansetzbaren Verlängerungsteil 46 versehen 2 sein und weist zweckmäßigerweise eine längsgerichtete Langlochausnehmung 47 auf, die von einer Befestigungsschraube 48 zum Befestigen des Haltebügels 43 am Werkstück, beispielsweise in einer vorausgehend hergestellten Gewindebohrung durchsetzt ist.

Das in den Figuren 5 und 6 dargestellte Werkzeug 39 ist im Allgemeinen ein Stirnfräser, mit zentraler Aussparung 63 und seitlichen Flankenschneiden 69, dessen Schneiden 60 mit Linksdrall angeordnet sind, um ein Mitlauffräsen und damit eine hervorragende Oberflächenqualität zu ermöglichen. Die Schneidenhöhe der Schneiden 60 des Stirnfräsers entspricht der Höhe eines Gewindeganges der Gewindebohrung. Im Abstand zu den Schneiden 60 ist der Stirnfräser mit einer umlaufenden, als Spänebrecher wirkenden Umfangsnut 61 versehen. Im weiteren Abstand zu den Schneiden 60 des Stirnfräsers ist das Werkzeug 39 mit radial ausladenden Gewindeschneidzähnen 62 versehen.

Die Gewindeschneidzähne 62 sind in einer senkrecht zur Achse des Werkzeuges 39 ausgerichteten Ebene 64 angeordnet und weisen eine gleichseitigg Querschnittsform mit zur Merkzeugachse koaxialer Stirnfläche 65 auf. Schließlich sind die Schneiden 60 des Siirnfräsers im übergangsbereich zur Umfangsfläche des Stirnfräsers mit einem Radius 66 abgrundet. Für die Entgratung ist im Abstand von ca. 1,5 x 0 des zu erstellenden Gewindes ein Senkerzahn 67 vorgesehen. Ferner ist die jeweils erforderliche Zahnhöhe 68 der Gewindeschneidzähne 62 einzuhalten.

Anmerkung: Der hier aufgeführte Fräser ist für die Erstellung von metrischem Rechtsgewinde ausgelegt, wobei natürlich alle Schneidflächen den erforderlichen Hinterschliff aufweisen müssen.

## Patentansprüche

1. Vorrichtung zum Herstellen von Innengewinden ohne Vorbohren in den vorien Werkstoff, insbesondere Sacklochgewide, mit einem an einer drehangetriebenen Werkzeugspindel excentrisch um die Bohrlochachse geführten und über ein Leitgewinde axial verschiebbaren Gewindefräswerkzeug, dem stirnseitig die Kernbohrung erzeugende Schneiden vorgelagert sind, wobei die Werkzeugspindel in einem zylindrischen Spindelgehäuse über drehangetriebene Excenterplatten radial verstellbar gelagert ist, und an dem Gehäuse der eine Teil des Leitgewindes angeordnet ist, dadurch gekennzeichnet, daß das Spindelgehäuse (15) von der durch eine handelsübliche, in ihrer Drehzahl regelbare tragbare Bohrmaschine (1) mit Linkslauf angetriebenen Werkzeugspindel (5) drehangetrieben in einem auf der Oberfläche des zu bearbeitenden Werkstückes aufsetzbaren Halter angeordnet ist und mit seinem Leitgewindeteil (20) mit dem am Halter angeordneten anderen Leitgewindeteil (19) im Eingriff ist, wobei der Drehantrieb für die Excenterplatten (8, 9) von der Werkzeugspindel (5) abgeleitet ist dabei macht die Bohrmaschine als Antrieb für die Werkzeugspindel deren excentrische und axiale Bewegungen mit.

2. Vorrichtung nach Anspruch 1, dadurch gekennzeichnet, daß die Verstellung der Excenterplatten (8, 9) eine das Erreichen der Spindelachse (58) ausschließende Begrenzung aufweist.

3. Vorrichtung nach Anspruch 1 und 2, dadurch gekennzeichnet, daß der Antrieb des Spindelgehäuses (15) eine mit der Werkzeugspindel (5) kämmende Schnecke (21) und ein von dieser angetriebenes Kegelradgetriebe (24) sowie ein um eine feste Welle (25) rotierendes, mit einem innenverzahnten, am Halter (16) feststehend angeordneten Zahnkranz (27) kämmendes Ritzel (26) umfaßt, wobei die Schnecke (21) über ein Zahnradpaar (22, 23) ein um eine quer zur Achse (57) der Werkzeugspindel (5) gerichtete Achse rotierendes Kegelrad (24) und dieses ein mit der Welle (25) des Ritzels (26) drehfest verbundenes Kegelrad antreibt.

4. Vorrichtung nach Anspruch 1 bis 3, dadurch gekennzeichnet, da& auf der mit dem Ritzel (26) verbundenen Welle (25) im Abstand voneinander zwei Kegelräder (24) axial verschiebbar angeordnet sind und daß für jede beabsichtigte Drehrichtung des Spindelgehäuses (15) jeweils eines dieser Kegelräder mit dem von der Schnecke (21) angetriebenen Kegelrad im Eingriff ist.

5. Vorrichtung nach Anspruch 1 bis 4, dadurch gekennzeichnet, daß das Ritzel (26) mit der die Kegelräder tragenden Welle (25) vermittels einer Klemmverbindung drehfest mit Drehmomenteinstellung verbindbar ist, wobei eine auf der Welle (25) angeordnete Mutter (32) mit einem um eine quer zur Welle (25) gerichtete Achse (57) schwenkbaren Excenter (34) zusammenwirkt und wobei der Excenter (34) seinerseits über einen Auslegerarm (33; zwischen wenigstens einer wirksamen und einer unwirksamen Lage hin und her verstellbar ist.

6. Vorrichtung nach Anspruch 1 bis 5, dadurch gekennzeichnet, daß der Halter (16) durch ein über einen Teil seiner Länge hin mit dem Leitgewindeteil (19) versehenes Rohr gebildet ist und daß der dem Ritzel (26) zugeordnete Zahnkranz (27) im Bereich der oberen Stirnseite des Halters (16) ausgebildet bzw. angeordnet ist.

7. Vorrichtung nach Anspruch 1 bis 6, dadurch gekennzeichnet, daß der mit dem Excenter (34) verbundene Auslegerarm (33) nach Erschöpfung der maximalen Arbeitstiefe am Halter (16) zur Anlage kommt und dadurch den Excenter (34) in seine unwirksame Lage verschwenkt, wodurch das Ritzel (26) gegenüber der Welle (25) freigängig ist.

8. Vorrichtung nach Anspruch 1 bis 7, dadurch gekennzeichnet, daß die beiden die Werkzeugspindel (5) aufnehmenden bzw. haltenden Excenterplatten (8 und 9) untereinander drehfest verbunden sind und daß an einer der beiden Excenterplatten (8 oder 9) über einen Zapfen (52) und ein Auge (51) eine Spindel (53) angreift, deren Spindelmutter (54) gegen ein am feststehenden Teil des Deckels (12) bzw. Bodens (13) des Spindelgehäuses (15) angeordnetes Widerlager abgestützt ist.

9. Vorrichtung nach Anspruch 1 bis 8, dadurch gekennzeichnet, daß am Halter (16) feststehend und aufragend eine Drehmomentabstützung für die Wandbohrmaschine oder dergleichen angeordnet ist, die aus einem Bügel (37) besteht und mit einem Stützstab (35) zusammenwirkt, der seinerseits radial ausladend an einer drehsicher mit dem Gehäuse (1) der Antriebsmaschine verbundenen, die Werkzeugspindel (5) aufnehmenden Hülse (3) befestigt ist.

10. Vorrichtung nach Anspruch 1 bis 9, dadurch gekennzeichnet, daß die Werkzeugspindel (5) in der sie aufnehmende Hülse (3) über Kugellageranordnungen (6) abgestützt und über die Hülse (3) in den Excenterplatten (8, 9) des Spindelgehäuses festgelegt ist.

11. Vorrichtung nach Anspruch 1 bis 10, dadurch gekennzeichnet, daß der Halter (16), das Spindelgehäuse (15) und die die Werkzeugspindel (5) aufnehmende Hülse (3) zueinander dekkungsgleiche Fensteröffnungen aufweisen, die einen Zugang zur Einspannstelle des Arbeitswerkzeuges bilden.

12. Vorrichtung nach Anspruch 1 bis 11, dadurch gekennzeichnet, daß die die Werkzeugspindel (5) aufnehmende Hülse (3) in einen mit dem Gehäuse der Antriebsmaschine (1) verbindbaren und einen im Spindelgehäuse (15) bleibend angeordneten Teil unterteilt ist.

13. Vorrichtung nach Anspruch 1 bis 12, dadurch gekennzeichnet, daß das Spindelgehäuse (15) ober- und unterendig jeweils einen mit der Innenumfangsfläche des rohrförmigen Halters zusammenwirkenden Führungsring (18) aufweist.

14. Vorrichtung nach Anspruch 1 bis 13, dadurch gekennzeichnet, daß der Halter (16) unterendig verstellbare seine Stirnfläche überragende Zentrierspitzen (42) aufweist.

15. Vorrichtung nach Anspruch 1 bis 14, dadurch gekennzeichnet, dsß die die Werkzeugspindel (5) aufnehmende Hülse (3) in ihrem außerhalb des Spindelgehäuses (15) liegenden Bereich einen radial gerichteten Anschluß für eine Druckluftleitung (38) und der rohrförmige Halter (16) an seine untere Stirnfläche angrenzend eine Auslaßöffnung (40) für Druckluft zum Späneaustrag aufweist und daß die Werkzeugspindel hohl ausgebildet ist.

16. Vorrichtung nach Anspruch 1 bis 15, dadurch gekennzeichnet, daß der Halter (16) in seinem unteren Bereich Befestigungseinrichtungen für den Anschluß eines Bügels (43) aufweist der seinerseits mit Mitteln zum Festlegen der Vorrichtung in einer ausgewählten Stellung am Werkstück ausgestattet ist.

17. Gewindefräswerkzeug zum Einsatz in einer Vorrichtung nach Anspruch 1 mit stirnseitigen, die Kernbohrung erzeugenden Schneiden, sowie die Gewindegänge erzeugenden Umfangsschneiden, dadurch gekennzeichnet, daß die die Kernbohrung erzeugenden Schneiden (60) mit Linksdrall zum Gleichlauffräsen ausgebildet sind, und daß diesen gegenüber die die Gewindegänge erzeugenden Schneiden (62) mit einem axialen Abstand angeordnet sind.

18. Werkzeug nach Anspruch 17, dadurch gekennzeichnet, daß die die Gewindegänge erzeugenden Schneiden (62) in einer Ebene angeordnet sind.

19. Werkzeug nach Anspruch 17 und 18, dadurch gekennzeichnet, daß in den die Kernbohrung erzeugenden Schneiden (60) eine versetzte Umfangsnut (61) als Spanbrecher angeordnet ist.

20. Werkzeug nach Anspruch 17 bis 19, dadurch gekennzeichnet, daß die die Kernbohrung erzeugenden Schneiden (60) eine zentrale Aussparung (63) mit seitlichen Flankenschneiden (69) aufweisen und daß der Übergang von den die Kernbohrung erzeugenden Schneiden (60) zu den Flankenschneiden mit einem Radius (66) oder einer Fase versehen ist.

21. Werkzeug nach Anspruch 17 bis 20, dadurch gekennzeichnet, daß seine Schneiden (60) an einsetzbaren Schneidplatten gebildet sind.

22. Werkzeug nach einem der Ansprüche 17 bis 21, dadurch gekennzeichnet, daß oberhalb der Gewindeschneiden (62) eine Senkerschneide (67) angeordnet ist.

23. Werkzeug nach einem der Ansprüche 17 bis 22, dadurch gekennzeichnet, daß zwischen der Vorschneide (60) und den Gewindeschneiden (62) eine ringförmige Vertiefung vorhanden ist.

24. Verwendung des Werkzeuges nach den Ansprüchen 17 bis 23 in CNC-gesteuerten Fräs- und Bohrmaschinen.

## Claims

1. Equipment and tool for production of all known types of threads in all tolerances (apart from buttress screw-threads) in a single-pass operation, where for a thread pitch which remains the same it is only necessary to have one integrated set of equipment and one integrated thread-cutting tool, with the use of a commercially-available hand-drilling machine having an electronically-controlled motor drive, or any other type of drive, with left-hand cutting, the speed of rotation of which may be regulated, wherein it has a tool spindle, which may be attached to the drive shaft of a hand-drilling machine or the like, and which is radially displaceable in relation to its axis and is accommodated in a cylindrical, so-called spindle housing where the position of said spindle housing may be adjusted axially in a holder which may be mounted on the tool, and wherein the cylindrical spindle housing may be driven in rotation by the tool spindle by way of a geared drive coupling within the holder.

2. The equipment according to Claim 1, wherein the tool spindle is mounted in eccentric plates located respectively in a cover plate and a base plate of the spindle housing so that it can be radially displaced in relation to the axis of said spindle housing.

3. The equipment according to Claim 1 and 2, wherein the mountings for the tool spindle in the eccentric plates are arranged in such as manner that a co-axial displacement of the tool spindle in relation to the axis of the spindle housing is not possible.

4. The equipment according to any one of Claims 1 to 3, wherein the radial offset of the tool spindle in relation to the axis of the spindle housing at least by half of the central cutting-free space of the milling tool is not possible.

5. The equipment according to any one of Claims 1 to 4, wherein the drive of the spindle housing meshes with a worm wheel, which drives a bevel gear as well as a pinion mounted rotatably on the shaft and this pinion meshes with the internally-toothed crown wheel which is fixed on the top end of the holder, in which case the worm wheel drives the rotating bevel gear which is mounted on an axis at right angles to the axis of the tool spindle and also the pinion, which is non-rotatably affixed to the shaft, by way of the pair of intermeshing gears.

6. The equipment according to any one of Claims 1 to 5, wherein two opposing output bevel gears are mounted in an axiallydisplaceable manner on the shaft to which the pinion is nonrotatably affixed and, for each intended direction of rotation of the spindle housing, one of said bevel gears respectively is caused to engage with the bevel gear which is driven by the worm wheel.

7. The equipment according to any one of Claims 1 to 6, wherein the pinion may be non-rotatably affixed to the shaft which carries the bevel gears by means of a clamping device, and a nut which can be screwed onto the shaft acts in conjunction with a pivotable eccentric which has a cantilever arm by means of which the eccentric can be moved between at least one operational and one non-operational setting.

8. The equipment according to any one of Claims 1 to 7, wherein the spindle housing has an external thread which engages with an internal thread of the holder and wherein the pitch of the threads of this arrangement corresponds to the pitch of the thread which is to be produced in the tapped hole, where the internal thread of the holder is disposed in such a manner that a bearing surface is retained for the upper guide ring.

9. The equipment according to any one of Claims 1 to 8, wherein the holder consists of a tube which is provided with an internal thread over part of its length, and wherein the crown wheel, which acts in conjunction with the pinion, is seated on, or attached to, the upper end surface of the holder.

10. The equipment according to any one of Claims 1 to 9, wherein the length of the threaded connection between the holder and the spindle housing corresponds to the maximum working depth of the equipment, and wherein the cantilever arm connected to the eccentric, after the maximum working depth has been reached on the holder, comes into contact with it and thus the eccentric is pivoted into its non-operational position, and wherein the pinion is released to be able to rotate on the shaft.

11. The equipment according to any one of Claims 1 to 10, wherein the two eccentric plates which carry or hold the tool spindle are£ non-rotatably connected together, and wherein a spindle engages with one or both the eccentric plates by way of a stud and an eye, the nut on the spindle being supported against a counter-thrust bearing which is rotatably mounted on a stationary portion of the cover plate.

12. The equipment according to any one of Claims 1 to 11, wherein a torque back-up, for the hand-drilling machine or the like, is rigidly attached to and projects upwards from the holder, and consists of a stirrup which has a vertical elongated slot passing through which there is a radially-projecting support rod which is fastened to a sleeve, containing the tool spindle, said sleeve being non-rotatably affixed to the housing of the driving machine.

13. The equipment according to any one of Claims 1 to 12, wherein the tool spindle is supported in the sleeve by means of ball bearings and, by way of the sleeve, the tool spindle is mounted in the two eccentric plates of the spindle housing.

14. The equipment according to any one of Claims 1 to 13, wherein the holder, the spindle housing and the sleeve which holds the tool spindle have mutually superimposable window openings which provide access to the site for clamping the working tool into position.

15. The equipment according to any one of Claims 1 to 14, wherein the sleeve which holds the tool spindle is divided into two parts, one of which is connected to the housing of the driving machine and the other part is permanently housed in the spindle housing.

16. The equipment according to any one of Claims 1 to 15, wherein the spindle housing has guide rings, at its upper and lower ends respectively, which act in conjunction with the inner peripheral surface of the tube-shaped holder.

17. The equipment according to any one of Claims 1 to 16, wherein the holder has adjustable pointed centring pins projecting downwards from its lower end which act in conjunction with centrepunch marks, produced by a centring device, to provide adequate centring of the equipment on the work material.

18. The equipment according to any one of Claims 1 to 17, wherein there is a connection for the supply of compressed air through which the compressed air is introduced into the tool spindle and through this into the operational site of the cutting tool, and to allow the compressed air to escape, and for removal of the metal chips, an outlet opening is provided at the lower end of the tube-shaped holder.

19. The equipment according to any one of Claims 1 to 18, wherein the holder has fastening provisions at its lower end for the attachment of a retaining fork-shaped stirrup or similar device which has an attachable extension as the means for the attachment of the equipment to a selected site on the work material.

20. A tool configured for working wi-th solid material or turnover plates which is suitable for general use in CNC-controlled milling machines and drilling machines from 2½-D upward, for use with equipment according to Claims 1 to 19, wherein it is generally configured as a face-milling cutter, the cutters of which are arranged for left-hand cutting for down-milling, and in which preferably at least two radially projecting threadcutting teeth with the profile of the thread which is to be cut are disposed at a distance above the face-milling core-cutter.

21. The tool according to Claim 20, wherein the cutting height of the cutters of the face-milling cutter corresponds to at least the single pitch of the thread being cut and the diameter of the preliminary cut, even after several grinding operations, should still be at least half the minor diameter of the thread to be cut, but naturally, with the utilization of turnover plates, this does not apply to the grinding dimensions.

22. The tool according to Claims 20 and 21, wherein the threadcutting teeth are arranged in a plane at right angles to the axis of the milling machine.

23. The tool according to any one of Claims 20 to 22, wherein an offset peripheral groove is provided in the cutters of the facemilling core-cutter to act as a chip breaker.

24. The tool according to any one of Claims 20 to 23, wherein the face-milling cutter has a central cutting-free space, and its cutters, in the peripheral region of the core cutter are rounded off with a curvature of small radius.

25. The tool according to any one of Claims 20 to 24, wherein, with its employment in CNC-controlled machines, the tapped hole is deburred at the same time by means of a core-drill tooth.

26. The tool according to any one of Claims 20 to 25, wherein there is a free space between the forecutters and the threadcutting teeth, in order to facilitate the manufacture and subsequent grinding of the thread-forming cutter.

## Revendications

1. Dispositif d'usinage sans préforage de taraudages dans du matériau plein, en particulier de taraudages de trous borgnes, comportant une fraise taraueuse, qui est guidée par une broche entraînée en rotation excentriquement autour de l'axe du trou, qui est déplaçable axialement par l'intermédiaire d'une taraudage/filetage conducteur, qui est précédée du côté frontal par un outil de coupe perçant le trou d'ébauche, la broche étant logée dans un boîtier cylindrique en étant déplaçable radialement par l'intermédiaire de plaques excentriques et une partie du taraudage/filetage directeur étant prévue sur ledit boîtier caractérisé en ce que le boîtier (15) de la broche, disposé dans un support à poser sur la surface de la pièce à travailler, est entraîné en rotation par la broche (5) entraînée elle-même en rotation à gauche par une perceuse portable (1) de type commercial, à vitesse de rotation réglable, et coopère par son filetage conducteur (20) avec le taraudage conducteur (19) prévu sur le support, la commande du mouvement de rotation des plaques excentriques (8), (9) étant dérivée de la broche et la perceuse ce commande de la broche participant aux mouvements axiaux et excentriques de la broche

2. Dispositi selon la revendication 1 caractérisé en ce que le chemin de réglage des plaques excentriques (8), (9) est limité de façon à ce que lesdites plaques ne puissent atteindre l'axe (58) de la broche.

3. Dispositif selon les revendications 1 et 2 caractérisé en ce que la commande du boîtier (15) de la broche comporte une hélice (21) coopérant avec la broche (5), un engrenage à roues coniques (24) entraîné par l'hélice (21) et un pignon (26) tournant autour d'un arbre fixe (25) et coopérant avec un grans pignon (27) à denture intérieure, solidaire du support (16), et, en ce que l'hélice (21) entraîne, par l'intermédiaire de roues dentées (22), (23), la roue conique (24) tournant autour d'un axe perpendiculaire à l'axe (57) de la broche (5) et entraînant elle-même une roue conique assemblée sans possibilité de rotation avec l'arbre (25) du pignon (26).

4. Dispositif selon les revendications 1 à 3 caractérisé en ce que sur l'arbre (25) du pignon (26) sont disposées, à une certaine distance l'une de l'autre, deux roues coniques (24) déplaçables axialement et en ce que pour déterminer chaque sens de rotation du boîtier (15) de la broche, l'une desdites roues coniques coopère avec la roue conique entraînée par l'hélice (21).

5. Dispositif selon les recendications 1 à 4 caractérisé en ce que le pignon (26) peut être assemblé sans possibilité de rotation, grâce à une jonction par serrage, avec l'arbre (25) portant les roues coniques, le moment de rotation étant réglable, et en ce que un écrou (32) disposé sur l'arbre (25) coopère avec un excentrique (34) mobile autour d'un axe (37) perpendiculaire à l'arbre (25) et réglable par un bras (33) au moins entre une position de travail et une position de repos.

6. Dispositif selon les revendications 1 à 5 caractérisé en ce que le support (16) est constitué d'un tube pourvu sur une partie de sa longueur d'un taraudage conducteur et en ce que le grans pignon (27) coopérant avec le pignon (26) est formé, respectivement disposé, dans la zone de la surface frontale supérieure du support (16).

7. Dispositif selon les revendications 1 à 6 caractérisé en ce que le bras (33) assemblé avec l'excentrique (34) vient au contact du support (16) lorsque la profondeur de travail maximale est atteinte et pivote grâce à l'excentrique (34) dans sa position de repos, ce qui rend libre le mouvement du pignon (26) par rapport à l'arbre (25).

8. Dispositif selon les revendications 1 à 7 caractérisé en ce que les plaques excentriques (8), (9) logeant, respectivement maintenant la broche (5), sont assemblées sans possibilité de rotation et en ce que sur une des plaques excentriques (8), (9) s'appuie, par un tenon (52) et un œil (51), une broche (53) dont l'écrou (54) s'appuie sur une contrebutée disposée sur la partie fixe du couvercle (12), respectivement du fond (13) du boîtier (15) de la broche.

9. Dispositif selon les revendications 1 à 8 caractérisé en ce que sur le support (16) est fixé un appui saillant du moment de rotation de la perceuse à main ou autre outil similaire, qui est constitué d'un étrier (37) coopérant avec une barre d'appui (35) saillant radialement et fixée sur une douille (3) qui est assemblée sans possibilité de rotation avec la machine d'entraînement et dans laquelle est logée la broche (5).

10. Dispositif selon les revendications 1 à 9 caractérisé en ce que la broche (5) est maintenue dans la douille (3) par des roulements à billes (6) et fixée par ladite douille dans les plaques excentriques (8), (9) du boîtier de la broche.

11. Dispositif selon les revendications 1 à 10, caractérisé en ce que le support (16), le boîtier (15) de la broche, et la douille (3) logeant la broche comportent des ouvertures coïncidant les unes avec les autres et formant l'accès à l'endroit de serrage de l'outil de travail.

12. Dispositif selon les revendications 1 à 11 caractérisé en ce que la douille (3) logeant la broche (5) est subdivisée en deux parites dont l'une peut être assemblée avec le boîtier de la machine d'entraînement (1) et dont l'autre demeure dans le boîtier (15) de la broche.

13. Dispositif selon les revendications 1 à 12 caractérisé en ce que le boîtier (15) de la broche comporte à ses extrémités supérieure et inférieure un anneau de guidage (18) coopérant avec la paroi intérieure du support cylindrique.

14. Dispositif selon les revendications 1 à 13 caractérisé en ce que le support (16) comporte à son extrémité inférieure des pointes de centrage (42) saillant sur sa surface frontale inférieure.

15. Dispositif selon les revendications 1 à 14 caractérisé en ce que la douille (3) logeant la broche (5) comporte, dans sa partie située à l'extérieur du boîtier (15), un raccord radial pour une conduite d'air comprimé (38) et en ce que le support cylindrique (16) comporte à sa surface frontale intérieure une ouverture de dégagement (40) d'air comprimé pour l'évacuation des copeaux et en ce que la broche est creuse.

16. Dispositif selon les revendications 1 à 15 caractérisé en ce que le support (16) comporte dans sa zone inférieure des moyens de fixation pour un étrier (43) pourvu lui-même de moyens de fixation du dispositif sur un emplacement choisi de la pièce à travailler.

17. Fraise taraudeuse utilisée avec un dispositif selon la revendication 1, comportant frontalement des outils de coupe du trou d'ébauche et sur sa périphérie des outils de coupe du pas de vis, caractérisé en ce que les outils de coupe (69) du trou d'ébauche présentent une torsion à gauche pour un fraisage dans le sens de l'avance et en ce que les outils de coupe (62) du pas de vis sont disposés axialement à une certaine distance des outils de coupe (60).

18. Fraise selon la revendication 17 caractérisée en ce que les outils de coupe (62) produisant le pas de vis sont disposés dans un même plan.

19. Fraise selon les revendications 17 et 18 caractérisé en ce que les outils de coupe (60) du trou d'ébauche comportent une rainure périphérique (61) décalée, servant de brise-copeaux.

20. Fraise selon les revendications 17 à 19 caractérisée en ce que les outils de coupe (60) comportent un évidement central (63) avec des flancs de coupe (69) et en ce que la zone de transition entre les outils de coupe (60) et les flancs de coupe (69) est arrondie chanfreinée.

21. Fraise selon les revendications 17 à 20 caractérisée en ce que les outils de coupe (60) sont formés sur des plaquettes de coupe pouvant être mises en place.

22. Fraise selon les revendications 17 à 21 caractérisée par un épaulement coupant disposé au-dessus des outils de coupe (62) du pas de vis.

23. Fraise selon les revendications 17 à 2 caractérisée par un creux annulaire située entre l'outil de précoupe (60) et les outils de coupe (62) du pas de vis.

24. Utilisation de l'outil selon les revendications 17 à 23 pour des fraiseuses et perceuses avec une commande CNC.

Fig. 1

Fig. 2

# Fig. 3

# Fig. 4

# Fig. 6

# Fig. 5